Europäisches Patentamt

European Patent Office

Office européen des brevets

(11) Numéro de publication: **0 317 382**
**A1**

# (12) DEMANDE DE BREVET EUROPEEN

(21) Numéro de dépôt: **88402691.5**

(22) Date de dépôt: **25.10.88**

(51) Int. Cl.⁴: **F 02 B 19/16**

(30) Priorité: **16.11.87 FR 8715797**

(43) Date de publication de la demande:
**24.05.89 Bulletin 89/21**

(84) Etats contractants désignés: **DE GB IT**

(71) Demandeur: **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur: **Dubin, Philippe**
**27, rue Daisy**
**F-93700 Drancy (FR)**

(74) Mandataire: **Bouget, Lucien et al**
**Cabinet Lavoix 2, Place d'Estienne d'Orves**
**F-75441 Paris Cédex 09 (FR)**

(54) **Moteur à allumage par compression comportant une préchambre à parois chauffantes en matière céramique.**

(57) La paroi de la préchambre (21) comporte au moins un élément conducteur (28) alimenté en courant électrique pour produire un dégagement de chaleur par effet Joule dans la paroi de la préchambre (21), variable suivant les zones de la surface interne de la préchambre. De préférence, la préchambre (21) ne comporte pas de bougie de préchauffage saillante dans son volume interne (21a). L'élément conducteur chauffant (28) est constitué de préférence par un filament métallique noyé dans la paroi céramique de la préchambre (21).

FIG. 3

EP 0 317 382 A1

## Description

## Moteur à allumage par compression comportant une préchambre à parois chauffantes en matière céramique

L'invention concerne un moteur à allumage par compression comportant au moins un cylindre et, associée à ce cylindre, une préchambre à parois en matière céramique communiquant avec la chambre du cylindre par un canal.

On connaît des moteurs à allumage par compression ou moteurs Diesel, à un ou plusieurs cylindres, comportant une préchambre de combustion dans laquelle débouche un injecteur de carburant dirigé vers la paroi de la préchambre traversée par le canal mettant en communication la préchambre et le cylindre du moteur dans lequel se déplace le piston.

Cette préchambre est balayée par de l'air comburant, au cours du cycle du moteur, et la forme de la préchambre, approximativement sphérique, favorise la formation de tourbillons, à l'intérieur de la préchambre, assurant un mélange homogène du carburant injecté et de l'air.

De telles préchambres de turbulences généralement désignées sous le nom de préchambres Ricardo sont disposées à l'intérieur de la culasse du moteur, chacune au-dessus du cylindre correspondant avec lequel la préchambre communique par un canal de direction sensiblement tangentielle par rapport à sa surface intérieure.

L'injecteur est généralement dirigé vers le fond de la préchambre, en direction du cylindre, mais à l'opposé de la zone où débouche le canal ; cet injecteur réalisant le mouillage de la paroi intérieure de la préchambre par du carburant.

De tels moteurs ont un fonctionnement satisfaisant à chaud mais il est indispensable, pour le démarrage à froid du moteur, de limiter le refroidissement de la préchambre par le carburant et de recourir à des moyens de chauffage additionnels de la préchambre.

Afin de limiter les échanges thermiques entre le carburant et la paroi de la préchambre, il serait avantageux de limiter les surfaces mouillées, pendant le démarrage et le fonctionnement à froid du moteur ; cette condition est cependant difficile à réaliser car les surfaces mouillées dépendent quantitativement du volume de la préchambre qui est lui-même imposé par les performances du moteur.

On a donc recours à l'utilisation d'un moyen de préchauffage de la préchambre constitué par une bougie saillante dans le volume intérieur de la préchambre.

Une telle bougie de préchauffage représente un véritable obstacle aérodynamique qui perturbe le champ de vitesse des gaz, au voisinage de l'injecteur.

La combustion s'en trouve dégradée et il en résulte des effets négatifs sur les performances énergétiques du moteur et sur le comportement de ce moteur en ce qui concerne la pollution atmosphérique. Les perturbations apportées à la circulation des gaz entrainent en effet une augmentation des émissions de fumées et de la quantité d'hydrocarbures imbrûlés.

Quelle que soit la forme d'une préchambre de combustion, il existe toujours des zones mortes où le tourbillon est moins intense ou même qui sont occupées par du gaz stagnant.

Ces zones mortes sont responsables de la présence d'hydrocarbures imbrûlés ou de particules dans les gaz du moteur, car la température reste insuffisante pour oxyder ces éléments résiduels, à l'intérieur des zones mortes, au moins pendant la phase de démarrage du moteur.

Pour améliorer le comportement hydrodynamique des préchambres de combustion des moteurs Diesel malgré la présence de bougies de préchauffage, on a préconisé et appliqué diverses solutions.

Un premier type de solution consiste à modifier la taille ou la forme de la bougie ; on utilise par exemple des bougies de taille réduite et éventuellement deux bougies par préchambre ; on a également proposé dans la demande de brevet Français FR-A-86-13871 d'utiliser des bougies profilées destinées à réduire la trainée aérodynamique des gaz, tout en maintenant une surface extérieure mouillée de la bougie suffisante pour assurer un bon fonctionnement de la préchambre.

Un deuxième type de solution consiste à placer la bougie dans la préchambre, dans une position telle que la circulation des gaz soit perturbée le moins possible. On a par exemple proposé de placer la bougie dans une position sensiblement parallèle à l'injecteur, soit au-dessus de la zone dans laquelle se développe le jet de carburant, soit dans un plan parallèle au plan de symétrie de la préchambre, dans une disposition latérale par rapport à l'injecteur. On a également proposé dans la demande de brevet 86-13766 de placer la bougie de préchauffage selon un axe incliné par rapport au plan de symétrie de la préchambre de façon à l'éloigner de la zone soumise au jet de carburant.

Toutes ces solutions représentent des compromis plus ou moins satisfaisants pour concilier des exigences contradictoires relatives à la surface mouillée de la bougie dans la préchambre, au comportement aérodynamique des gaz et à la position de l'injecteur.

On a d'autre part proposé d'utiliser, pour réaliser la paroi des préchambres de combustion de moteurs Diesel, des matières céramiques ayant l'avantage d'être de bons isolants thermiques. Dans ce mode de réalisation, les chambres de combustion sont généralement usinées à l'intérieur de pièces en matière céramique qui sont insérées et montées dans la culasse du moteur, au-dessus de chacun des cylindres. De telles chambres doivent également comporter une bougie de préchauffage et présentent en conséquence les inconvénients mentionnés ci-dessus.

On a également décrit, dans les brevets JP-A-58-160510, JP-A-59-10729 et FR-A-2.196.433, des chambres de combustion pour moteurs Diesel dont la paroi peut être entourée par des moyens de chauffage électrique ou renfermer de tels moyens de chauffage. Cependant, il ne s'agit pas, dans ces brevets, de chambres de turbulence dans lesquelles des gaz de combustion du moteur circulent suivant un tourbillon. En outre, les solutions retenues dans ces brevets ne permettent pas d'apporter une solution au problème des zones mortes dans les chambres de turbulence.

Le but de l'invention est donc de proposer un moteur à allumage par compression comportant au moins un cylindre et, associée à ce cylindre, une préchambre constituant une chambre de turbulence dans laquelle des gaz de combustion du moteur circulent suivant un tourbillon, certaines zones du volume interne de la chambre ou zones mortes n'étant pas balayées par le tourbillon et la chambre de turbulence ayant une paroi en matière céramique communiquant par un canal avec la chambre du cylindre dans laquelle se déplace un piston, pourvue d'un dispositif d'injection de carburant débouchant dans la préchambre et dirigé vers le cylindre, ce moteur présentant des caractéristiques énergétiques et de comportement à la pollution atmosphérique très nettement améliorées.

Dans ce but, la paroi de la préchambre comprenant au moins une partie en matière céramique comporte dans certaines zones au moins de cette partie en matière céramique au moins un élément conducteur associé à un moyen d'alimentation en courant électrique susceptible de faire passer un courant dans l'élément conducteur pour produire dans la paroi de la préchambre, un dégagement de chaleur par effet Joule variable suivant les zones de la surface interne de la préchambre et de façon à provoquer un dégagement de chaleur préférentiellement au voisinage des zones mortes.

Afin de bien faire comprendre l'invention, on va maintenant décrire, à titre d'exemples non limitatifs, en se référant aux figures jointes en annexe, plusieurs modes de réalisation d'un moteur suivant l'invention comportant une préchambre à parois chauffantes en matière céramique.

La figure 1 est une vue partielle en coupe de la partie supérieure du bloc cylindre et de la culasse d'un moteur Diesel comportant une préchambre de turbulence suivant l'art antérieur.

La figure 2 est une vue en coupe de la préchambre suivant 2-2 de la figure 1.

La figure 3 est une vue en coupe analogue à la vue de la figure 1, montrant une préchambre suivant l'invention et suivant un premier mode de réalisation.

La figure 4 est une vue en coupe analogue aux vues des figures 1 et 3 montrant une préchambre selon l'invention et selon un second mode de réalisation.

La figure 5 est une vue en coupe analogue à la vue de la figure 1 montrant l'implantation d'une préchambre céramique à parois chauffantes dans la culasse d'un moteur Diesel.

La figure 6 est une vue de côté suivant 6 de la figure 4, d'une culasse suivant l'invention montrant la prise de branchement électrique de l'élément chauffant et l'extrémité de branchement de ce moyen d'alimentation.

La figure 7 est une vue en coupe d'un connecteur d'alimentation électrique d'une préchambre suivant l'invention logeable dans un trou de passage d'une bougie chauffante dans la culasse du moteur.

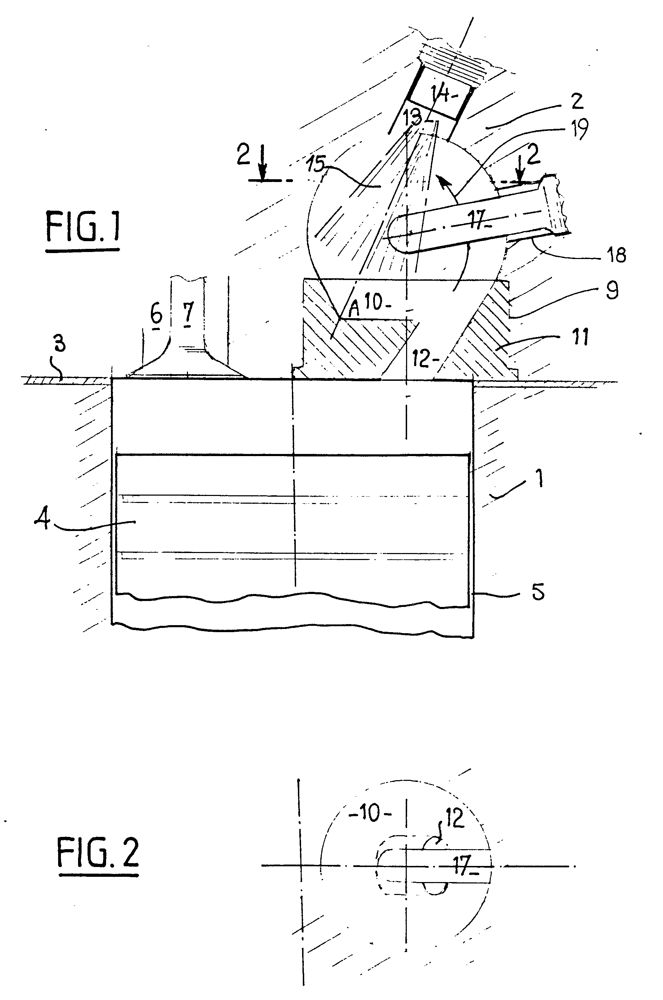

Sur la figure 1, on voit la partie supérieure du bloc cylindre 1 d'un moteur sur lequel repose la culasse 2 par l'intermédiaire d'un joint de culasse 3. Le bloc cylindre 1 est usiné pour constituer un cylindre 5 dans lequel se déplace un piston 4.

La culasse 2 est percée de canaux d'admission et d'échappement tels que 6 qui débouchent dans la chambre du cylindre 5 par une ouverture qui peut être fermée par une soupape telle que 7.

La culasse 2 est également usinée, au-dessus de chacun des cylindres 5, pour constituer le logement 9 d'une préchambre de combustion 10 également visible sur la figure 2. La paroi intérieure de cette préchambre de combustion 10 est usinée en partie à l'intérieur de la culasse 2 et en partie dans une pièce 11 rapportée à l'intérieur du logement 9 usiné dans la culasse. Un canal 12 de direction sensiblement tangentielle par rapport à la paroi intérieure de la préchambre 10 est usiné dans la pièce 11 et débouche à la partie supérieure de la chambre du cylindre 5.

La culasse est également usinée pour ménager un passage 13 servant de logement pour un injecteur de carburant 14 et débouchant à la partie supérieure de la préchambre 10. Un jet de carburant pulvérisé 15 peut être ainsi injecté dans la préchambre 10.

Pour le démarrage à froid du moteur, on utilise une bougie de préchauffage 17 fixée dans un trou de passage 18 traversant la paroi de la culasse. L'extrémité de la bougie chauffante 17 est saillante à l'intérieur de la préchambre 10 si bien que cette extrémité saillante est susceptible de perturber l'écoulement tourbillonnaire des gaz dans la préchambre 10, cet écoulement étant figuré par la flèche 19 sur la figure 1.

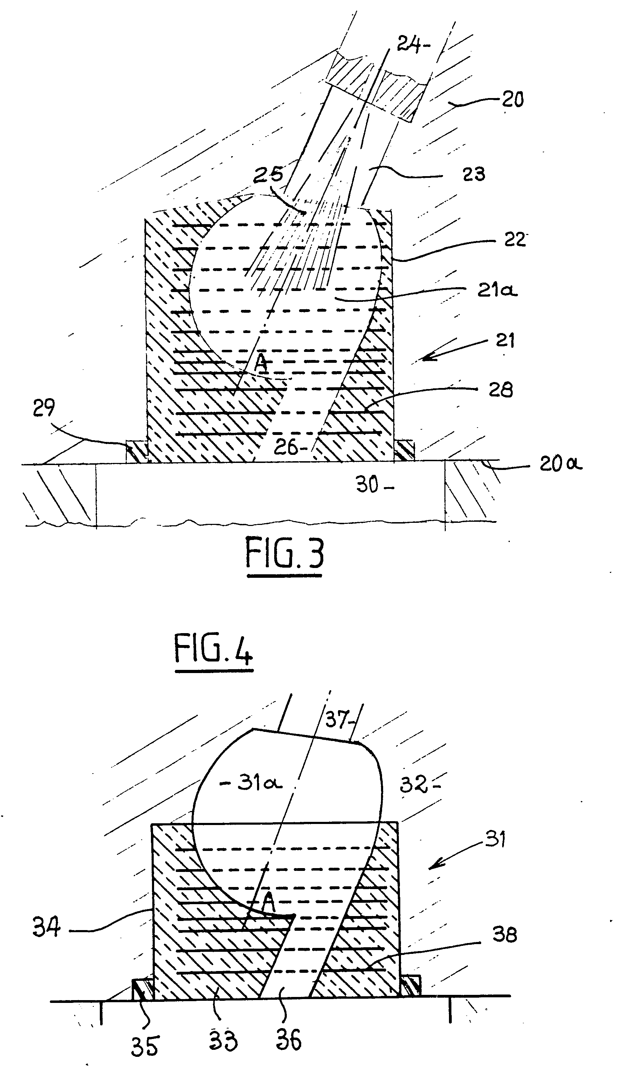

Sur la figure 3, on a représenté une préchambre de combustion 21 d'un moteur Diesel suivant l'invention disposée à l'intérieur d'un logement 22 usiné dans la culasse 20 du moteur et débouchant dans le plan 20a du joint de culasse.

Un passage 23 traversant la culasse 20 et débouchant dans le volume interne de la préchambre 21 constitue un logement pour un injecteur de carburant 24 susceptible d'envoyer un jet de carburant pulvérisé 25 dans la préchambre 21.

La préchambre 21 est constituée par un bloc en matière céramique dans lequel sont usinés la préchambre proprement dite 21a et un canal 26. Le volume intérieur 21a de la préchambre constituant la préchambre proprement dite a une forme approximativement sphérique et le canal 26 a une disposition pratiquement tangentielle par rapport à la paroi de cette préchambre. Le canal 26 débouche à l'une de ses extrémités dans le volume intérieur de la préchambre 21 et à son autre extrémité dans la chambre du cylindre 30 disposée en dessous de la préchambre 21. Le canal 26 assure ainsi la mise en communication de la partie supérieure du cylindre avec le volume intérieur 21a de la préchambre 21.

Le jet de carburant 25 est dirigé vers un point A situé à la partie inférieure de la surface interne de la préchambre 21, à l'opposé de l'ouverture débouchante du canal de communication 26.

Le bloc de matière céramique constituant la paroi de la préchambre 21 a une forme correspondant sensiblement à la forme de l'ouverture 22 dans laquelle il est fixé sans jeu dans l'exemple décrit grâce à une bague de fixation 29.

La paroi céramique de la préchambre 21 renferme un filament conducteur électrique 28 en contact intime avec la matière céramique constituant la paroi.

Ce filament 28 peut être en particulier constitué par un fil en alliage pour résistance électrique tel qu'un alliage nickel-chrome.

Le filament sera de préférence noyé dans la masse de la paroi céramique et disposé avantageusement sous la forme d'un enroulement hélicoïdal dont les deux extrémités sont accessibles sur une face externe du bloc de céramique constituant la paroi de la préchambre 21.

Comme il est visible sur la figure 3, dans ce mode de réalisation, le filament conducteur 28 s'étend sensiblement sur toute la hauteur de la préchambre 21.

La culasse 20 et la paroi de la préchambre 21 ne comportent aucune ouverture de passage d'une bougie de préchauffage, la résistance de chauffage 28 étant utilisée pendant le démarrage et le fonctionnement à froid du moteur, comme il sera expliqué plus loin.

Sur la figure 4, on voit un second mode de réalisation d'une préchambre 31 suivant l'invention.

Le volume intérieur 31a constituant la préchambre proprement dite est réalisé en deux parties : une première à l'intérieur de la culasse 32 qui est usinée suivant une surface approximativement sphérique et une deuxième à l'intérieur d'un bloc en matière céramique 33 constituant une partie de la paroi de la préchambre 31.

Comme dans le mode de réalisation représenté sur la figure 3, le bloc de matière céramique 33 est fixé à l'intérieur d'un logement 34 de la culasse 32, grâce à une bague de fixation 35.

Un canal de communication 36 débouche à l'une de ses extrémités dans le volume intérieur 31a de la chambre 31 et à son autre extrémité dans le plan de joint de la culasse 32. Le canal 36 est comme précédemment de direction tangentielle par rapport à la surface intérieure la préchambre proprement dite 31a. Un passage d'injection 37 débouche dans la partie supérieure de la préchambre 31a et permet l'injection d'un jet de carburant en direction du point A de la surface interne de cette préchambre.

Un filament résistant 38 est noyé à l'intérieur de la pièce céramique 33 constituant la partie inférieure de la chambre 31.

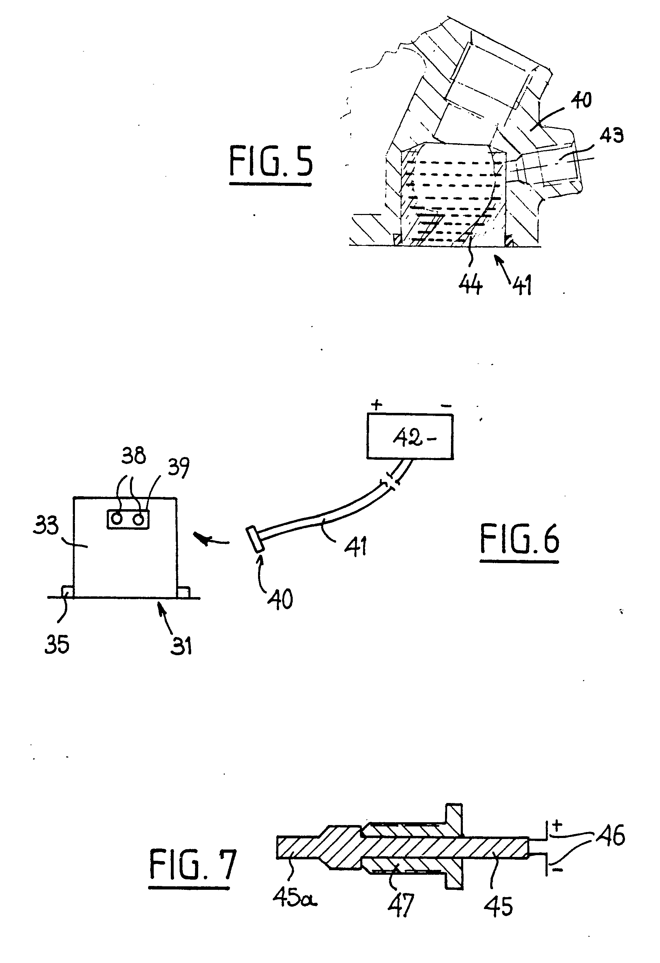

Comme il est visible sur la figure 6, les extrémités du filament 38 sont accessibles sur une face du bloc 33 en matière céramique et constituent une prise 39 pour une extrémité de branchement 40 d'un câble électrique 41 à deux conducteurs reliés à son autre extrémité à une source de courant électrique 42 qui peut être constituée par une batterie. L'extrémité 40 du câble 41 peut être amenée en position de branchement sur une face de la préchambre 31 en utilisant une ouverture d'une dimension suffisante traversant la paroi de la culasse.

Sur la figure 5, on a représenté une partie de la culasse 40 d'un moteur Diesel équipé d'une préchambre 41 dont la paroi est constituée par une pièce en matière céramique dans laquelle est noyée une résistance de chauffage 44. La préchambre 41 est réalisée sensiblement de la manière représentée sur la figure 3. La culasse 40 dans laquelle est fixée la préchambre 41 comporte un trou 43 de passage et de fixation d'une bougie chauffante.

Ce trou de passage et de fixation 43 peut recevoir un connecteur tel que représenté sur la figure 7. Un tel connecteur comporte un corps isolant 45 dans lequel sont noyés deux conducteurs électriques d'alimentation 46 et dont l'extrémité 45a constitue l'élément de connection. Le corps 45 est monté à l'intérieur d'un écrou 47 dont le filetage correspond à celui d'une bougie de préchauffage qui peut être fixé dans l'ouverture filetée 43. Lorsque le connecteur est engagé dans l'ouverture 43, sa partie d'extrémité 45a vient réaliser la connection entre les conducteurs 46 et les extrémités de la résistance de chauffage 44.

La culasse 40 peut être celle d'un moteur Diesel suivant l'art antérieur, l'adaptation de la préchambre 41 et de sa connection électrique ne nécessitant aucun réusinage ou tout au plus un réusinage limité permettant l'adaptation et la fixation du bloc de céramique constituant la préchambre 41, dans la culasse.

Lors du démarrage à froid d'un moteur selon l'invention, le filament conducteur noyé dans la paroi de la préchambre est alimenté en courant électrique, la commande d'alimentation résultant d'une action positive du conducteur ou du résultat d'une mesure d'un paramètre du moteur effectuée par un capteur.

Le passage du courant électrique dans le filament résistant provoque un dégagement de chaleur par effet Joule. La chaleur se propage dans la paroi de la préchambre, en particulier vers l'intérieur, si bien que la surface interne de la préchambre est susceptible de se trouver à une température élevée favorisant la combustion des hydrocarbures injectés dans la préchambre et le fonctionnement à froid du moteur. Ce résultat est obtenu sans utiliser de bougie de préchauffage si bien que le tourbillon des gaz dans la préchambre n'est pas perturbé, en particulier sous l'injecteur.

Le carburant pulvérisé injecté vient en contact des parois chaudes ce qui favorise sa vaporisation et sa combustion.

On utilise un ou plusieurs filaments constituant une ou plusieurs résistances chauffantes qui assurent un chauffage non uniforme de la paroi de la préchambre. On peut ainsi chauffer différemment les différentes zones de la paroi de la préchambre par exemple en insérant un réseau de filaments plus ou moins dense dans les différentes zones de la paroi.

On favorise ainsi une augmentation de température de la paroi au voisinage des zones mortes de la préchambre, de façon à favoriser l'oxydation des hydrocarbures imbrûlés et des particules ayant tendance à stagner ou à se former dans ces zones mortes.

De même, la partie de la surface interne de la préchambre sur laquelle arrive le jet de carburant pulvérisé (zone voisine du point A), peut constituer une zone dont la température est sensiblement plus élevée que la température des autres zones de la surface interne de la préchambre et donne ainsi naissance à un point chaud.

La paroi de la préchambre ou les parties de cette paroi réalisées en matière céramique peuvent être constituées par toute matière céramique ayant des propriétés de tenue aux chocs thermiques satisfaisantes.

De telles matières céramiques sont utilisées par exemple pour la réalisation de corps de bougie de préchauffage ou de parois de préchambre ne comportant pas d'élément de chauffage.

On connait également des matières céramiques qui ont une bonne conductibilité électrique et qui renferment principalement du carbure de silicium et du diborure de titane. De telles matières peuvent être utilisées pour réaliser tout ou partie de la paroi d'une préchambre suivant l'invention. Des zones continues en matière céramique conductrice peuvent être noyées dans de la matière céramique non conductrice constituant le corps de la paroi de la préchambre, ces zones conductrices pourront être alimentées en courant électrique et constituer les éléments chauffants de la paroi de la préchambre.

On pourrait également réaliser l'ensemble de la paroi en matière céramique conductrice et faire passer un courant dans cette paroi pour provoquer un dégagement de chaleur. Dans ce cas, la paroi doit être isolée électriquement de la culasse par un joint ou une couche isolante.

Les principaux avantages d'un moteur suivant l'invention comportant une préchambre à parois chauffantes résident dans l'obtention de meilleures performances énergétiques et d'un meilleur comportement en ce qui concerne la pollution atmosphérique.

Ces résultats sont obtenus principalement par le fait que la paroi interne de la préchambre présente une température élevée et variable suivant les zones de la paroi pendant le démarrage et le fonctionnement à froid du moteur et qu'il n'est plus nécessaire de prévoir une bougie de préchauffage. La formation d'un tourbillon dans les gaz en circulation dans la préchambre est mieux contrôlée si bien qu'il est possible de donner une forme et une dimension au canal de transfert des gaz entre la préchambre et le cylindre pour favoriser au maximum la circulation de ces gaz.

La combustion est sensiblement améliorée grâce à un meilleur contrôle du tourbillon et à l'augmentation de la température dans les zones mortes.

Le démarrage et le fonctionnement à froid sont beaucoup plus satisfaisants, les effets de paroi froide étant supprimés. Le bruit du moteur tournant à froid est également diminué, la combustion étant mieux contrôlée pendant la phase d'échauffement.

Sur le plan de la fabrication, les modifications à apporter à l'usinage de la culasse sont très faibles, comme il a été expliqué plus haut, dans le cas d'une préchambre dont la paroi est entièrement en matière céramique et dont les éléments de chauffage sont alimentés en courant électrique par l'intermédiaire d'un trou de passage d'une bougie de préchauffage.

Dans le cas d'une culasse dont la paroi est seulement partiellement en matière céramique, comme représenté sur la figure 4, il faut prévoir un perçage de la culasse pour permettre la connection des éléments de chauffage, sur une des faces externes de la préchambre.

Le moteur suivant l'invention a en outre l'avantage de réduire les émission d'hydrocarbures imbrûlés et de particules dans les gaz d'échappement, si bien qu'il devient possible d'éviter l'utilisation de techniques de dépollution complexes et coûteuses.

L'invention ne se limite pas aux modes de réalisation qui ont été décrits. C'est ainsi que le moteur suivant l'invention peut comporter une préchambre d'une forme quelconque dont la paroi est constituée entièrement ou partiellement par de la matière céramique.

Les éléments de chauffage peuvent être disposés dans tout ou partie des zones en matière céramique de la paroi, de façon à dégager un flux thermique variable d'un point à un autre de la surface interne de la préchambre.

Les éléments chauffants peuvent être constitués par une partie de la paroi elle-même rendue conductrice ou constitués en une matière céramique ayant une bonne conductivité thermique.

Il est même possible de réaliser l'ensemble de la paroi de la préchambre en une matière céramique conductrice.

Il est possible de prévoir des éléments de chauffage et une source d'alimentation permettant d'obtenir une puissance thermique plus ou moins importante.

Enfin, l'invention s'applique à tout moteur à combustion interne et à allumage par compression à injection indirecte.

**Revendications**

1.- Moteur à allumage par compression comportant au moins un cylindre (30) et, associée à ce cylindre, une préchambre (21, 31, 41) constituant une chambre de turbulence dans laquelle des gaz de combustion du moteur circulent suivant un tourbillon, certaines zones du volume interne (21a, 31a) de la chambre (21, 31) ou zones mortes n'étant pas balayées par le tourbillon et la chambre de turbulence ayant une paroi en matière céramique communiquant par un canal (26, 36) avec la chambre du cylindre (30) dans laquelle se déplace un piston, pourvue d'un dispositif d'injection de carburant (23, 24, 37) débouchant dans la préchambre (21, 31, 41) et dirigé vers le cylindre (30), caractérisé par le fait que la paroi de la préchambre (21, 31, 41) comprenant au moins une partie en matière céramique comporte dans certaines zones au moins de cette partie en matière céramique au moins un élément conducteur (28, 38, 44) associé à un moyen d'alimentation en courant électrique (40, 41, 42) susceptible de faire passer un courant dans l'élément conducteur (28, 38, 44) pour produire dans la paroi de la préchambre (21, 31, 41), un dégagement de chaleur par effet Joule variable suivant les zones de la surface interne de la préchambre (21, 31, 41) et de façon à provoquer un dégagement de chaleur préférentiellement au voisinage des zones mortes.

2.- Moteur suivant la revendication 1, caractérisé par le fait que le ou les éléments chauffants (28, 38, 44) sont disposés dans les parois de la préchambre (21, 31, 41) de façon à dégager une quantité de chaleur élevée au voisinage d'un point d'impact A du carburant injecté dans la préchambre (21, 31, 41).

3.- Moteur suivant la revendication 1 ou 2, caractérisé par le fait que la préchambre (21, 31, 41) ne comporte pas de bougie de préchauffage saillante dans le volume intérieur (21a, 31a) de la préchambre (21, 31).

4.- Moteur suivant l'une quelconque des revendications 1, 2 et 3, caractérisé par le fait que la paroi de la préchambre (21, 31, 41) est constituée au moins partiellement par un bloc en matière céramique dans lequel est noyé un filament conducteur (28, 38, 44) constituant une résistance chauffante.

5.- Moteur suivant l'une quelconque des revendications 1, 2 et 3, caractérisé par le fait que la paroi de la préchambre (21, 31, 41) est constituée au moins partiellement par une matière céramique conductrice de l'électricité et que l'élément conducteur de chauffage est constitué par la matière céramique conductrice.

## FIG. 1

## FIG. 2

FIG.3

FIG.4

## FIG.5

40

43

44 41

## FIG.6

38 39

33

35 31

40

41

42 -

## FIG. 7

45a 47 45

46

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 482 195 (BOSCH) <br> * Page 1, lignes 1-10,23-35; page 3, lignes 15-38; page 4, lignes 18-27 * <br> --- | 1-4 | F 02 B 19/16 |
| D,Y | PATENT ABSTRACTS OF JAPAN, vol. 7, no. 287 (M-264)[1432], 21 décembre 1983, page 34 M 264; & JP-A-58 160 510 (YANMAR DIESEL K.K.) 24-09-1983 <br> * Résumé * <br> --- | 1-4 | |
| A | PATENT ABSTRACTS OF JAPAN, vol. 10, no. 349 (M-538)[2405], 26 novembre 1986; & JP-A-61 149 518 (HONDA MOTOR CO. LTD) 08-07-1986 <br> * Résumé * <br> --- | 1 | |
| A | DE-C- 841 973 (DAIMLER-BENZ) <br> * Page 3, lignes 2-18,73-88 * <br> --- | 5 | |
| D,A | PATENT ABSTRACTS OF JAPAN, vol. 8, no. 96 (M-294)[1533], 4 mai 1984, page 45 M 294; & JP-A-59 10 729 (TOYO KOGYO K.K.) 20-01-1984 <br> * Résumé * <br> --- | 1,4 | DOMAINES TECHNIQUES RECHERCHES (Int. Cl.4) <br><br> F 02 B |
| D,A | FR-A-2 196 433 (VINCENT) <br> * Page 1, lignes 1-20; page 4, lignes 3-10,14-19,26-29; page 5, lignes 30-35; page 7, lignes 11-13 * <br> --- | 3 | |
| A | US-A-4 300 497 (WEBBER) <br> * Colonne 2, lignes 27-47 * <br> --- | 4 | |
| A | GB-A-2 101 207 (BOSCH) <br> * Page 3, lignes 65-81 * <br> --- | 3 | |
| A | DE-A-2 155 346 (BOCK) <br> ----- | | |

Le présent rapport a été établi pour toutes les revendications

| Lieu de la recherche | Date d'achèvement de la recherche | Examinateur |
|---|---|---|
| LA HAYE | 24-01-1989 | JORIS J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P0402)